# EUROPEAN PATENT APPLICATION

(11) **EP 0 550 369 A2**
(43) Date of publication of application: **07.07.1993**
(21) Application number: 92480167.3
(22) Date of filing: 05.11.1992
(51) Int. Cl.: G06F 9/44, G06F 9/46

(54) **Method and system for the automatic performance of a task within an object-oriented software system**

(30) Priority: 31.12.1991 US 816454
(71) Applicant: International Business Machines Corporation, Armonk, N.Y. 10504 (US)
(72) Inventor: Miller, Mary Elizabeth, Colleyville, TX 76034 (US); Ruiz, Thomas Michael, Colleyville, TX 76034 (US)
(74) Representative: de Pena, Alain

(57) **Abstract**

A method and system within an object oriented software system are disclosed for the automatic performance of a task in response to a specified event. A dormant first object observes events occurring at a second object. In response to an occurrence at the second object of a preselected event, the first object automatically initiates a selected action wherein the selected action may be a set of actions predefined by a user or a procedure.

## Description

The present invention relates in general to the field of object oriented data processing systems and in particular to the field of a first object automatically initiating a selected action. Still more particularly, the present invention relates to a method and system for a first object automatically initiating a selected action in response to an occurrence at a second object of a preselected event.

Object oriented programming has experienced growing popularity with application developers primarily due to the ability to reuse code. The object oriented environment more closely models "real world" entities.

An object in an object-oriented environment consists of related pieces of code and data. An object has a library of methods which are essentially unique to an object giving an object its specific behaviors. The class of an object defines a grouping based on one or more properties, and an instance is a single item in a class. For example, a class of an object could be considered as analogous to professions, i.e. lawyers, doctors, engineers, and programmers, with an instance of an object being analogous to a particular individual in a class.

A class defines methods for constructing new instances and also instance methods which define how an instance behaves and reacts to incoming messages. The instance variables define the particular features of an instance of an object such as an individual's salary. These instance variables may be defined or may be empty awaiting definition. An instance's data structure is described by its collection of instance variables. Pointers are used to point to a structure in object form.

Agents are objects within an object oriented computing environment that do work for a user. For example, intelligent agents have been used in executive and decision support systems. However, these agents have been semi-autonomous and passive. Semi-autonomous agents may only be invoked by a user. They may not be invoked by system events such as system interrupts, temporal events, and requests from other agents. Passive agents are "awake" all of the time. They are active in that they are continuously executing. Therefore, in order to utilize an agent, a user must first decide which function to perform and then initiate the appropriate agent. It should, therefore, be apparent that a need exists for a method and system whereby a dormant first object may observe events occurring at a second object and automatically initiate a selected action in response to a preselected event.

It is, therefore, one object of the present invention to provide an improved method and system for automatically performing a task in response to a specified event.

It is another object of the present invention to provide an improved method and system for, within a dormant first object, observing events occurring at a second object.

It is yet another object of the present invention to provide an improved method and system, for within a first object, automatically initiating a selected action in response to an occurrence at a second object of a preselected event.

The foregoing objects are achieved as is now described. A method and system within an object oriented software system are disclosed for the automatic performance of a task in response to a specified event. A dormant first object observes events occurring at a second object. In response to an occurrence at the second object of a preselected event, the first object automatically initiates a selected action wherein the selected action may be a set of actions predefined by a user or a procedure.

The novel features believed characteristic of the invention are set forth in the appended claims. The invention itself, however, as well as a preferred mode of use and further objects and advantages thereof, will best be understood by reference to the following detailed description of an illustrative embodiment when read in conjunction with the accompanying drawings, wherein:

Figure 1 is a pictorial representation of an object oriented computing environment containing script objects which may be utilized to implement the method and system of the present invention.

Figure 2 is a pictorial representation of an object oriented computing environment depicting the individual components of a script object in accordance with the method and system of the present invention.

Figure 3 is a high level flow chart depicting the creation of a script agent and script object in accordance with the method and system of the present invention.

Figure 4 is a high level flow chart depicting a trigger processor observing events on a desktop environment and triggering a script processor upon an occurrence of a preselected event.

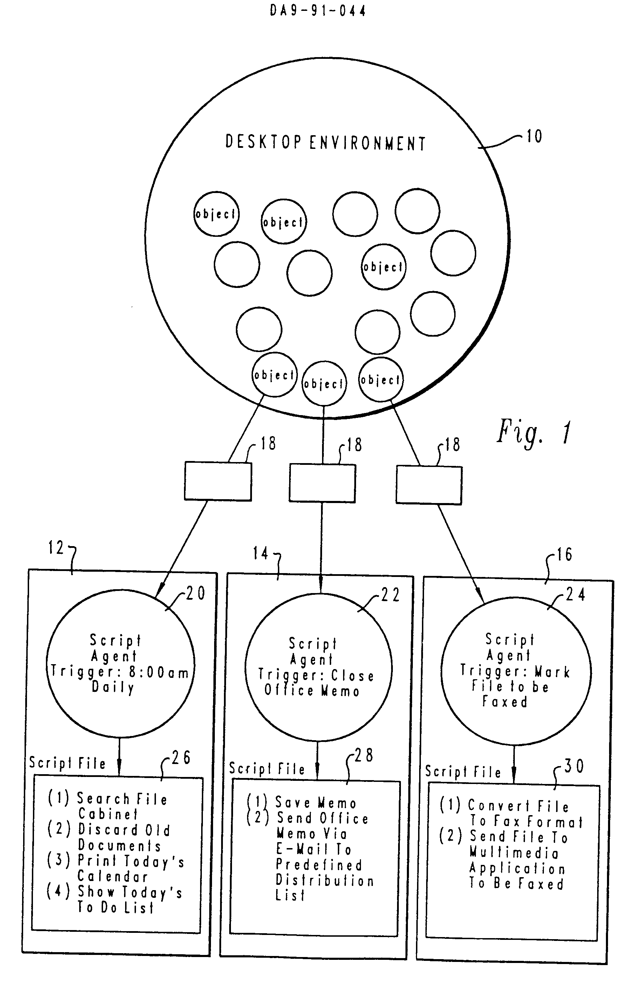

With reference now to the figures and in particular with reference to Figure 1, there is depicted a pictorial representation of an object oriented computing environment including a desktop environment 10 containing a plurality of objects, and containing script objects 12, 14, and 16. Desktop environment 10 may be linked to script objects 12, 14, and 16 via a dependency mechanism 18. Dependency mechanism 18 may be implemented using the Smalltalk V/PM language which is a product of Digitalk, Inc., wherein events occurring at desktop environment 10 are automatically made available to script objects 12, 14, and 18.

Script object 12 consists of a script agent 20 with a preselected event for the trigger and a script file 26 which contains the predefined set of actions or procedures to be completed upon an occurrence of the trigger. For example, a trigger may be any one of a plurality of preselected events such as temporal events, system generated interrupts, change of state of the object, or an explicit user request to initiate the script object.

Script agent 20 has a preselected event trigger of 8 a.m. daily. Upon the triggering event occurring, script agent 20 executes script file 26. Script agent 2 0 will follow the predefined set of actions contained within script file 26 including searching a file cabinet, discarding old documents, printing today's calendar and showing today's to do list. In the same manner, script object 14 consists of script agent 22 and script file 28. Upon a trigger of closing an office memo, script agent 22 will execute script file 28 which contains a predefined set of actions including saving the memo and sending it via E-mail to a predefined distribution list. Script object 16 consists of script agent 24 and script file 30 wherein upon the occurrence of marking a file to be faxed, script agent 24 executes script file 30 to convert the file to the appropriate fax format and sends the file to a multimedia application implemented on desktop environment 10 for faxing documents.

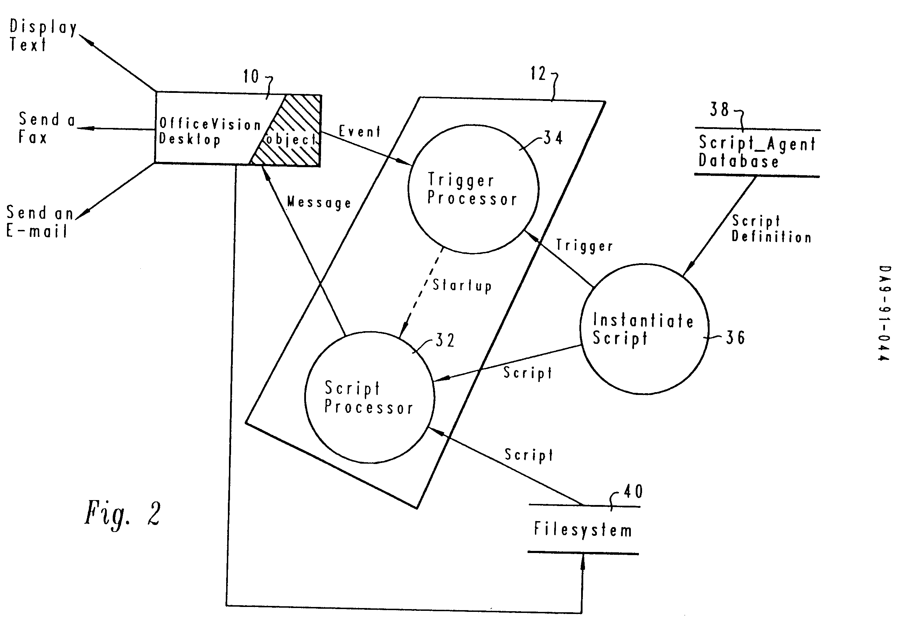

Referring now to Figure 2, there is illustrated a pictorial representation of an object oriented computing environment depicting a desktop environment 10 implemented using an International Business Machines PS/2 executing Office Vision which is included in the environment, an instantiate script 36, a script agent database 38, a file system 40, and script object 12 which includes a script processor 32 and a trigger processor 34. Although operation of script object 12, script agent 20, and script file 26 are described, it will be apparent to one skilled in the art that a different set of script objects, script agents, and script files may be used to implement the method and system of the present invention.

Desktop environment 10 contains a collection of objects which respond to messages and events. These objects perform a variety of work for a desktop user such as displaying text, preparing text to be faxed and sending E-mail messages. Once a user has created a script agent, it is stored in script agent database 38. The script agent can masquerade as a user and send messages to desktop environment 10, which causes actions to take place on the desktop computing system in the same manner as if responding to user commands.

When desktop environment 10 is started up, instantiate script 36 initializes both trigger processor 34 and script processor 32 using information obtained from script agent database 38. Trigger processor 34 and script processor 32 are both contained in script object 12. Trigger processor 34 receives all events occurring on desktop environment 10 via dependency mechanism 18 while script processor 32 remains dormant. In response to a preselected event, trigger processor 34 sends a start up command to script processor 32 which then activates script processor 32 from its normally dormant state.

Script processor 32 reads script file 26 from file system 40 and communicates messages contained in script file 26 to desktop environment 10. Desktop environment 10 then performs the specified task in response to those messages.

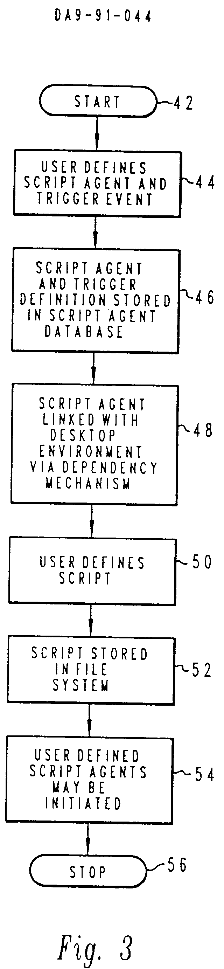

Now referring to Figure 3, there is illustrated a high level flow chart depicting the process a user utilizes in creating a script object. The process begins at block 42 and thereafter passes to block 44, in which the user defines a script agent and a predefined event to be used as a trigger. Next, the script agent and trigger definition are stored in the script agent database 38 (see Figure 2) as depicted in block 46. Thereafter, the process passes to block 48, which illustrates the script agent being linked with desktop environment 10 via dependency mechanism 18. Next, the process passes to block 50, which illustrates a user defining a script file. Block 52 depicts the script file being stored in file system 40 (see Figure 2). Thereafter, user defined script agents may be initiated as illustrated in block 54. User defined script agents may be initiated after being defined or each time desktop environment 10 is started up. The process then terminates at block 56.

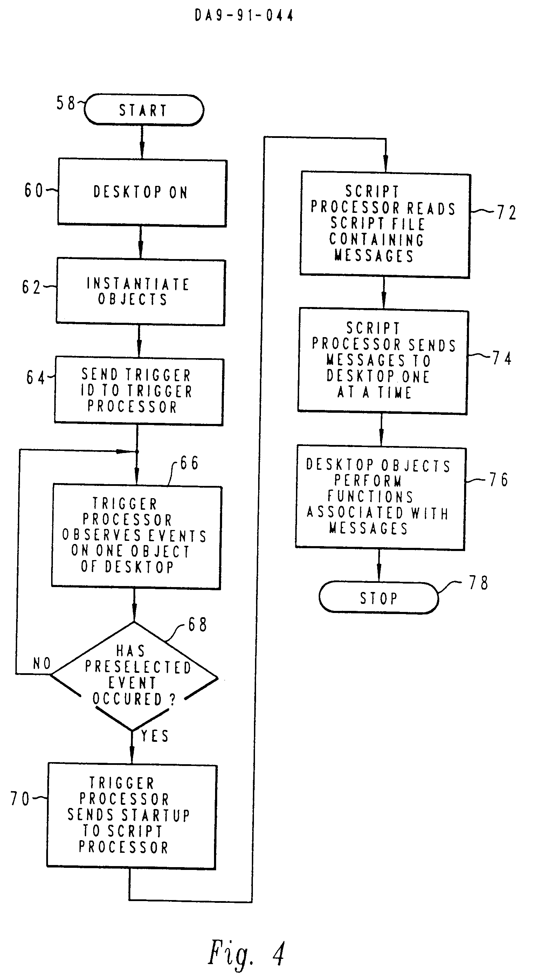

Referring now to Figure 4, there is illustrated a high level flow chart depicting the operation of a script object 12. The process begins at block 58 and thereafter moves to block 60, which depicts a desktop environment 10 being started. Next, block 62 illustrates all objects, including script objects, being instantiated, wherein the objects are initialized.

Next, the process moves to block 64, which illustrates a trigger identification being sent to trigger processor 34 (see Figure 2). The process then passes to block 66, which depicts trigger processor 34 observing events on desktop environment 10 (see Figure 2). Thereafter, the process passes to block 68, which depicts a determination of whether or not a preselected event has occurred. If a preselected event has not occurred, the process passes back to block 66.

Referring again to block 68, if a preselected event has occurred, the process passes to block 70, which illustrated trigger processor 34 sending a startup message to script processor 32. Thereafter, script processor 32 reads a script file containing messages as depicted in block 72. Next, block 74 illustrates script processor 32 sending messages to desktop environment 10 one at a time. The process then passes to block 76, wherein it is illustrated a desktop environment 10 performing functions associated with those received messages. The process then terminates at block 78.

Script objects may be used to perform a plurality of selected actions such as janitorial types of duties. These may include cleanup or backup of files or disks and set up of a user-tailored environment on the desktop. A fully autonomous first object includes a trigger processor and script processor. Upon a preselected triggering event occurring, the trigger processor "wakes up" the script processor from its normally dormant state to an active state. The script processor then initiates a selected action.

Upon reference to the foregoing, those skilled in the art will appreciate that the Applicants have disclosed a method and system whereby a dormant first object may observe events occurring at a second object and automatically initiate a selected action in response to a preselected event.

## Claims

1. A method in an object oriented software system for automatically performing a task in response to a specified event, said method comprising the steps of:
within a dormant first object, observing a plurality of events occurring at a second object; and,
in response to an occurrence at said second object of a preselected one of said plurality of events, within said first object automatically initiating a selected action.

2. The method according to claim 1, wherein said first object includes a trigger processor.

3. The method according to claim 2, wherein said trigger processor further comprises the steps of:
observing a plurality of events; and,
identifying an occurrence of a preselected one of said plurality of events.

4. The method according to claim 1, wherein said first object includes a script processor.

5. The method according to claim 4, wherein said script processor performs the step of initiating a selected action.

6. The method according to claim 1, wherein the step of initiating a selected action is in response to an occurrence at only one said second object.

7. The method according to claim 1, wherein the step of observing a plurality of events further comprises the step of:
linking said first object and said second object together utilizing a dependency mechanism whereby an event which occurs at said second object is automatically made available to said first object.

8. The method according to claim 7, further comprising the step of making all events which occur at said second object automatically available to said first object.

9. The method according to claim 1, wherein the step of initiating a selected action further comprises the step of performing a set of actions predefined by a user.

10. The method according to claim 9, wherein said set of actions predefined by a user are interpreted during execution of said method.

11. The method according to claim 9, wherein said set of actions predefined by a user are stored within a script.

12. The method according to claim 11, wherein said script includes a sequence of commands interpreted during execution of said method.

13. The method according to claim 1, wherein the step of initiating an action within said first object further comprises the step of executing a procedure.

14. An object oriented software system for automatically performing a task in response to a specified event, said system comprising:
a first object;
a second object;
means connecting said first object to said second object for communicating events from said second object to said first object;
decision means within said first object for determining whether a communicated event is a preselected event; and,
activation means within said first object for performing an action in response to an occurrence of said communicated event being said preselected event.

15. The system according to claim 14, wherein said means connecting said first object to said second object includes a dependency mechanism means wherein an event which occurs at said second object is automatically made available to said first object.

16. The system according to claim 14, wherein said first object includes means for performing a set of actions predefined by a user.

17. The system according to claim 16, wherein said set of actions predefined by a user are stored within a script.

18. The system according to claim 17, wherein said script comprises a sequence of commands interpreted while said system is executing.

19. The system according to claim 14, wherein said first object includes means for executing a procedure.

20. The system according to claim 14, wherein said decision means comprises a trigger processor.

21. The system according to claim 14, wherein said activation means includes 1 script processor.
